Europäisches Patentamt

European Patent Office

Office européen des brevets

(11) Publication number:

**0 050 159**
**B1**

(12)

## EUROPEAN PATENT SPECIFICATION

(45) Date of publication of patent specification: **20.08.86**

(51) Int. Cl.⁴: **G 01 J 1/04, G 01 J 5/20**

(21) Application number: **81900353.1**

(22) Date of filing: **15.04.81**

(86) International application number:
**PCT/JP81/00089**

(87) International publication number:
**WO 81/03068 29.10.81 Gazette 81/25**

(54) METHOD AND APPARATUS FOR DETECTING THE POSITION OF A LASER BEAM.

(30) Priority: **18.04.80 JP 50467/80**

(43) Date of publication of application:
**28.04.82 Bulletin 82/17**

(45) Publication of the grant of the patent:
**20.08.86 Bulletin 86/34**

(84) Designated Contracting States:
**DE GB**

(56) References cited:
**FR-A-1 564 270**
**GB-A-1 084 263**
**GB-A-2 011 612**
**JP-Y-46 030 800**
**US-A-3 731 099**
**US-A-3 939 706**

**ISA TRANSACTIONS, vol. 18, no. 4, 1979,
PITTSBURGH, OH (US), T. FOSTER et al.: "A
new approach to laser beam heat flux and
power profiling", pages 57-65**

**APPLIED OPTICS, vol. 10, no. 11, November
1971, NEW YORK (US), S. JACOBS: "A simple
CO2 laser power meter", pages 2564-2565**

(73) Proprietor: **Hitachi, Ltd.**
**5-1, Marunouchi 1-chome**
**Chiyoda-ku Tokyo 100 (JP)**

(72) Inventor: **SHIRAKURA, Toshiharu**
**1180-3, Oaza-Muramatsu Tokai-mura
Naka-gun Ibaraki 319-11 (JP)**
Inventor: **SUGAWARA, Hiroyuki**
**4-33-11, Nishinarusawa-cho Hitachi-shi
Ibaraki 316 (JP)**
Inventor: **KUWABARA, Kouji**
**2-14-15, Mizuki-cho Hitachi-shi
Ibaraki 316 (JP)**
Inventor: **SASAKI, Kouji**
**3-10-12, Suehiro-cho Hitachi-shi
Ibaraki 316 (JP)**
Inventor: **TAKEMORI, Satoshi**
**161-433, Ishinazaka-cho Hitachi-shi
Ibaraki 319-12 (JP)**

(74) Representative: **Strehl, Peter, Dipl.-Ing. et al
Strehl, Schübel-Hopf, Schulz Patentanwälte
Widenmayerstrasse 17 Postfach 22 03 45
D-8000 München 22 (DE)**

**0 050 159**

(56) References cited:
PHILIPS RESEARCH REPORTS, vol. 23, 1968, J.
SIEKMAN et al.: "A simple power-output meter
specially designed for continuous laser
beams", pages 375-387

SOVIET JOURNAL OF QUANTUM
ELECTRONICS, vol. 5, no. 1, July 1975, NEW
YORK (US), V. KUTMICHEV et al.:
"Determination of the energy center and
diameter of a laser beam", pages 109-110

SOVIET JOURNAL OF QUANTUM
ELECTRONICS, vol. 4, no. 11, May 1975, V.
KUZMICHEV et al.: "Fast response meter for
measuring the power of Carbon Dioxide laser
radiation", pages 1337-1339

## Description

In welding, cutting, surface treatment or the like by a laser processing device, a laser beam is emitted from a laser oscillator and the path of the beam is changed by a reflector while the beam is focussed by a lens on the work to be processed. Such laser processing devices involve the problem that the path of the laser beam to be directed to the work may undesirably deviate due to a slight inclination or offset of the mirrors incorporated in the optical system due to temperature changes. This problem is serious particularly in laser devices for production purposes because the laser source in such devices is usually located a distance away from the work, so that the offset of the beam path is amplified. Thus, even a small deviation at the laser source results in an unacceptable large offset at the position of the work. This offset of the beam path causes not only a change in the position of application of the beam onto the work but also a deviation of part of the laser beam from the effective plane of the optical system, which results in a scattering of the laser beam, thus a reduced efficiency of the laser power, so that the processing performance of the laser is effected.

It is an object of the invention to detect the position of a laser beam as accurately as possible and without causing any substantial loss of beam power.

This object is met in accordance with the method and apparatus called for in claims 1 and 2, respectively. According to this method and apparatus, the difference between the resistances of two parallel elongate members is detected, which members are made of a material that changes its resistance upon receipt of a laser beam. The two members are moved transversely of the beam axis until the difference between their resistances becomes zero. Due to this differential measurement, most factors influencing the measurement are eliminated so that the position of the laser beam is located with high accuracy.

The concept of moving such elongate members transversely of a laser beam and measuring a resistance-change is known from UK patent GB—A—2 001 612. This document, however, is concerned with measuring the power of heat radiation, rather than the position of a beam. There, the elongate members are constituted by filament connected in zigzag-fashion to a disk which is adapted to rotate through the radiation beam. It is necessary that the filament.is moved through the entire cross-section of the beam in order to measure the total beam power.

. Similarly, the system disclosed in Sov. J. Quant. Electron. 1975, pages 1337 to 1339, is concerned with measuring the power of laser radiation, rather than detecting the position of a laser beam. Also, the power-sensitive filament of this prior art system is not moved through the beam cross-section but is formed as a stationary grid through which the beam passes.

An embodiment of the invention will now be described with reference to the drawing, in which

Fig. 1 is a schematic illustration of a laser processing device incorporating an apparatus for detecting the position of the laser beam;

Fig. 2 is a sectional view of the position detecting apparatus of Fig. 1; and

Fig. 3 is a graph showing the relationship between the resistance change and the position of the center of the laser beam.

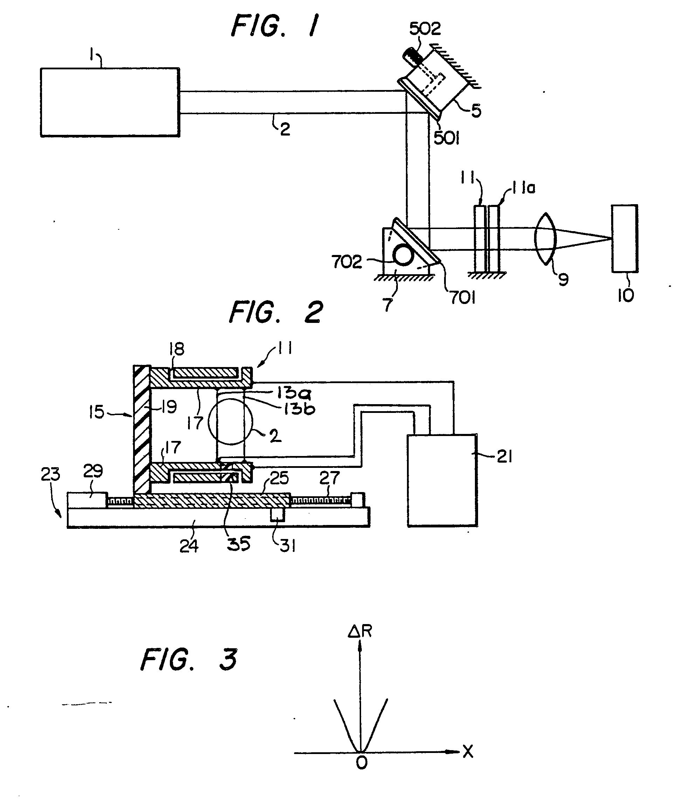

In the laser processing device of Fig. 1, which may be used for welding, cutting, surface treatment or similar purposes, a laser 1 is constituted by an exciting region, a concave mirror and an output mirror, and is adapted to emit a laser beam 2 which is successively directed towards reflecting mirror devices 5 and 7. The reflecting mirror devices 5 and 7 are respectively provided with full-reflecting mirrors 501, 507 inclined at 45° with respect to the laser beam 2, and rotary driving means 502, 702 adapted to rotate the mirrors around axes which are parallel to the planes of the mirrors. The laser beam 2 emitted from the full-reflecting mirror 7 is directed towards a lens 9 and is focussed on the work 10 to be processed.

The position detecting apparatus 11, which has a construction as shown in Fig. 2, is disposed in the path of the laser beam between the mirror device 7 and the lens 9. The apparatus comprises two parallel thin wires 13a, 13b spaced from each other and disposed across the laser beam 2, a frame 17 carrying the wires 13a, 13b, and a driving mechanism 23.

The thin wires 13a, 13b are made from a material which varies its electrical resistance in accordance with temperature change, such as for example gold, platinum, copper plated with gold or platinum, and so forth. The thin wires 13a, 13b preferably have such a shape that the amount of laser beam interrupted by the wires is minimized, i.e. they have a circular cross-section, although other cross-section shapes are possible. In case the thin wires 13a, 13b have a rectangular cross-section, they are placed such that the longer side of the cross-sectional shape is parallel to the travelling direction of the laser beam.

The frame 15 has a U-shape with a pair of holders 17 spaced and electrically insulated from each other by an insulator 19. The thin wires 13a, 13b are secured at both of their ends to the holders 17 by welding, soldering or the like. At one of their ends, the wires 13a, 13b are insulated from each other by an insulator 35.

The holders 17 are made from a material having a high heat conductivity and are provided with water channels 18 through which cooling water is circulated to cool the holders 17 down to a substantially constant temperature. This is because the holders are heated by the heat conducted from the thin wires 13a, 13b and would in turn gradually heat the thin wires, which would prevent a correct measurement of the change of resistance as a function of the incoming laser beam.

The driving mechanism 23 has a base 24, a movable table 25 is adapted to slide on the base 24, a screw rod 27 engaging a threaded bore formed in the movable table 25, and a motor 29 connected to the screw rod 27 to drive the latter. The movable table 25 is adapted to be moved in the X-direction in response to the direction of rotation of the motor 29, i.e. in the axial direction of the screw rod 27 shown in Fig. 2. The frame 15 is fixed to the movable table 25 for movement therewith.

The above apparatus operates as follows. The laser beam 2 emitted from the laser 1 is directed through the optical system towards the work 10 to be processed. The movable table 25 is driven along the X-axis (Fig. 3) by actuation of the motor 29 so that the thin wires 13a, 13b move transversely of the laser beam 2 at a right angle to the latter as indicated in Fig. 2. The thin wires 13a, 13b intercept an amount of the laser beam which corresponds to the cross-sectional area occupied by the thin wires, thereby being heated. The resistances of the thin wires 13a, 13b change in accordance with the change in temperatures. The wires 13a, 13b are connected to a resistance meter 21 which is capable of measuring the difference ΔR between 21 the resistance of the wire 13a and that of the wire 13b.

In order to detect the center of the laser beam 2, the thin wires 13a, 13b are moved in such a manner as to negate the difference between their resistances. The position at which the resistance difference becomes zero is the position of the center of the laser beam, as indicated in Fig. 3.

### Claims

1. A method of detecting a parameter of a laser beam, comprising

placing an arrangement of elongate members (13a, 13b) across the laser beam (2), the members (13a, 13b) being thin relative to the beam diameter and made of a material which changes its resistance upon receipt of the laser beam (2),

producing relative movement between the arrangement and the laser beam (2) transversely of the beam axis, and

measuring the change of the resistance of the members (13a, 13b),

characterised in that, for detecting the position of the laser beam (2),

two said members (13a, 13b) are placed parallel to, and spaced from, each other, and

said movement is produced so as to null the difference between the resistances of the two members (13a, 13b).

2. An apparatus for detecting a parameter of a laser beam, comprising

an arrangement of elongate members (13a, 13b) extending across the laser beam (2), the members (13a, 13b) being thin relative to the beam diameter and made of a material which changes its resistance upon receipt of the laser beam,

driving means (23) for producing relative movement between the arrangement and the laser beam (2) transversely of the beam axis, and

a resistance meter (21) for measuring the change of the resistance of the members (13a, 13b),

characterised in that, for detecting the position of the laser beam (2),

the arrangement includes two said members (13a, 13b) extending parallel to, and spaced from, each other, and

the resistance meter (21) is adapted to detect the difference between the resistances of the two members (13a, 13b).

3. The apparatus of claim 2, wherein the elongate members (13a, 13b) are cooled at both ends.

4. The apparatus of claim 2 or 3, including a frame (15) having a pair of holders (17) electrically insulated from each other for supporting the two elongate members (13a, 13b), the holders (17) being made of heat conductive material and provided with cooling means (18).

5. The apparatus of claim 4, wherein the ends of the two elongate members (13a, 13b) supported by one of the holders (17) are electrically insulated from each other by an insulator (35).

### Patentansprüche

1. Verfahren zum Erfassen eines Parameters eines Laser-Strahls, wobei

eine Anordnung länglicher Bauteile (13a, 13b) quer zu dem Laser-Strahl (2) plaziert wird, wobei die Bauteile (13a, 13b) relativ zum Strahldurchmesser dünn sind und aus einem Material bestehen, dessen Widerstand sich bei Empfang des Laser-Strahls (2) ändert,

eine Relativbewegung zwischen der Anordnung und dem Laser-Strahl (2) quer zur Strahlachse erzeugt wird, und

die Widerstandsänderung der Bauteile (13a, 13b) gemessen wird,

dadurch gekennzeichnet, daß zum Erfassen der Lage der Laser-Strahls (2)

die Bauteile (13a, 13b) parallel zu- und in Abstand voneinander angeordnet werden und

die Bewegung ao ausgeführt, daß die Differenz zwischen den Widerständen der beiden Bauteile (13a, 13b) zu Null wird.

2. Vorrichtung zum Erfassen eines Parameters eines Laser-Strahls, mit

einer Anordnung von quer zu dem Laser-Strahl (2) verlaufenden länglichen Bauteilen (13a, 13b) die relativ aum Strahldurchmesser dünn sind und aus einem Material bestehen, dessen Widerstand sich bei Empfang des Laser-Strahls (1) ändert,

einer Antriebseinrichtung (23) zur Erzeugung einer Relativbewegung zwischen der Anordnung und dem Laser-Strahl (2) quer zur Strahlachse, und

einem Widerstands-Meßgerät (21) zum Messen der Widerstandsänderung der Bauteile (13a, 13b),

dadurch gekennzeichnet, daß zum Erfassen der Lage des Laser-Strahls (2)

die Anordnung zwei parallel zu- und in Abstand voneinander verlaufende Bauteile (13a, 13b) aufweist und

das Widerstandsmeßgerät (21) zur Erfassung der Differenz zwischen den Widerständen der beiden Bauteile (13a, 13b) ausgelegt ist.

3. Vorrichtung nach Anspruch 2, wobei die länglichen Bauteile (13a, 13b) an beiden Enden gekühlt sind.

4. Vorrichtung nach Anspruch 2 oder 3, mit einem Rahmen (15), der ein Paar von gegeneinander elektrisch isolierten Haltern (17) zur Halterung der beiden länglichen Bauteile (13a, 13b) aufweist, wobei die Halter (17) aus wärmeleitfähigem Material bestehen und mit einer Kühleinrichtung (18) versehen sind.

5. Vorrichtung nach Anspruch 4, wobei die von einem der beiden Halter (17) gehaltenen Enden der beiden länglichen Bauteile (13a, 13b) durch einen Isolator (35) elektrisch gegeneinander isoliert sind.

**Revendications**

1. Procédé de détection d'un paramètre d'un faisceau laser, consistent à

— placer un ensemble d'organes allongés (13a, 13b) en travers du faisceau laser (2), les organes (13a, 13b) étant minces par rapport au diamètre du faisceau étant constitués en un matériau dont la résistance varie lors de la réception du faisceau laser (2),

— produire un déplacement relatif entre l'ensemble et le faisceau laser (2), transversalement par rapport à l'axe du faisceau, et

— mesurer la variation de la résistance des organes (13a, 13b),

caractérisé en ce que, pour la détection de la position du faisceau laser (2),

— lesdits deux organes (13a, 13b) sont disposés parallèlement et à distance l'un de l'autre, et

— que ledit déplacement est produit de manière à annuler la différence entre les résistances des deux organes (13a, 13b).

2. Appareil pour détecter un paramètre d'un faisceau laser, comprenant:

— un ensemble d'organes allongés (13a, 13b) s'étendant en travers du faisceau laser (2), les organes (13a, 13b) étant minces pour rapport au diamètre du faisceau et étant constitués en un matériau dont la résistance varie lors de la réception du faisceau laser (2),

— des moyens d'entraînement (23) servant à produire un déplacement relatif entre l'ensemble et le faisceau laser (2), transversalement par rapport à l'axe du faisceau, et

— un appareil (21) de mesure de la résistance, servant à mesurer la variation de la résistance des organes (13a, 13b),

caractérisé en ce que, pour la détection de la position du faisceau laser (2),

— l'ensemble inclut lesdits deux organes (13a, 13b) parallèles et distants l'une de l'autre, et

— que l'appareil (21) de mesure de résistance est apté à détecter la différence entre la résistance des deux organes (13a, 13b).

3. Appareil selon la revendication 2, dans lequel les organes allongées (13a, 13b) sont refroidis au niveau de leurs deux extrémités.

4. Appareil selon la revendication 2 ou 3, comprenant un cadre (15) possédant deux supports (17) et isolés électriquement l'un de l'autre et servant à supporter les deux organes allongés (13a, 13b), les supports (17) étant constitués en un matériau conduisant la chaleur et étant équipés de moyens de refroidissement (18).

5. Appareil selon la revendication 4, dans lequel les extrémités des deux organes allongés (13a, 13b) supportés par l'un des supports (17) sont isolés électriquement l'un de l'autre par un isolant (25).

## FIG. 1

## FIG. 2

## FIG. 3